# EUROPÄISCHE PATENTSCHRIFT

(11) **EP 1 025 141 B1**
(45) Veröffentlichungstag und Bekanntmachung des Hinweises auf die Patenterteilung: **21.12.2005**
(21) Anmeldenummer: 98961016.7
(22) Anmeldetag: 16.10.1998
(51) Int. Cl.: C08G 59/30, C08G 59/32, C08G 59/50, C08L 63/00

(54) **EPOXIDHARZMISCHUNG, DARAUS HERGESTELLTE VERBUNDWERKSTOFFE UND DEREN VERWENDUNG**
EPOXY RESIN MIXTURE, COMPOSITES PRODUCED THEREFROM AND THE USE THEREOF
MELANGE DE RESINE EPOXY, COMPOSITES FABRIQUES A PARTIR DUDIT MELANGE ET LEUR UTILISATION

(30) Priorität: 28.10.1997 DE 19747553
(43) Veröffentlichungstag der Anmeldung: 09.08.2000
(73) Patentinhaber: SIEMENS AKTIENGESELLSCHAFT, 80333 München (DE)
(72) Erfinder: VON GENTZKOW, Wolfgang, D-91077 Kleinsendelbach (DE); HEINL, Dieter, D-91052 Erlangen (DE); KAPITZA, Heinrich, D-90765 Fürth (DE); SCHREYER, Michael, D-91085 Weisendorf (DE)
(86) Internationale Anmeldenummer: PCT/DE1998/003042
(87) Internationale Veröffentlichungsnummer: WO 1999/021907

(56) Entgegenhaltungen:
- EP-A- 0 370 446
- EP-A- 0 384 940
- WO-A-94/10223
- WO-A-96/07684
- WO-A-98/13407

## Beschreibung

Die Erfindung betrifft eine Epoxidharzmischung zur Herstellung von Verbundwerkstoffen nach einem Injektionsverfahren, die hergestellten Verbundwerkstoffe und die Verwendung dieser Verbundwerkstoffe.

Verbundwerkstoffe auf der Basis von Epoxidharzen und anorganischen oder organischen Verstärkungsmaterialien haben in vielen Bereichen der Technik und des täglichen Lebens eine hohe Bedeutung erlangt. Gründe dafür sind einerseits die relativ einfache und sichere Verarbeitung der Epoxidharze und andererseits das gute mechanische und chemische Eigenschaftsniveau der gehärteten Epoxidharzformstoffe, das eine Anpassung an unterschiedliche Einsatzzwecke und eine vorteilhafte Nutzung der Eigenschaften aller am Verbund beteiligten Werkstoffe gestattet.

Insbesondere bei der Herstellung großflächiger Teile in kleiner Stückzahl, wie sie für den Leichtbau von Flugzeugen, Schiffen und Fahrzeugen sowie als Gehäuse-, Isolations- und Konstruktionswerkstoffe in der Elektro- oder Bauindustrie Einsatz finden, muß auf einfache und kostengünstige Formgebungsverfahren geachtet werden. Bewährt haben sich hierbei die Injektionstechniken RTM (Resin Transfer Moulding) und DPRTM (Differential Pressure Resin Transfer Moulding), welche eine rationelle Arbeitsweise ermöglichen und glatte, lackierfähige Innen- und Außenflächen liefern. Bei diesen Verfahren werden Epoxidharzmischungen in eine Form injiziert, die bei Bedarf vorher mit den benötigten anorganischen und/oder organischen Verstärkungsmaterialien bestückt wird. Als Verstärkungsmaterialien können dabei Vliese, Matten, Gelege, Gewebe, Geflechte, Gestricke und/oder Gewirke von Verstärkungsfasern, wie Glas-, Kohlenstoff-, Aramid- und/oder anderen Fasern, eingesetzt werden. Dabei richtet sich die Auswahl des Fasermaterials nach den mechanischen Anforderungen an die Produkte. Auch Metall-, Holz- und Naturfasern können geeignet sein. Insbesondere für den Leichtbau können zusätzlich Honigwabenstrukturen oder Schäume, wie Polyurethan- und Polymethacrylimid-Schäume, zum Einsatz kommen.

Die Injektionstechnik ist insbesondere dann vorteilhaft, wenn Epoxidharze eingesetzt werden, die bei Raumtemperatur verarbeitet und bei niedrigen Temperaturen drucklos gehärtet werden können. In diesem Fall können kostengünstige Kunststoff-Formen verwendet werden. Die benötigten Harzformulierungen müssen allerdings bei Verarbeitungstemperatur sehr niederviskos sein, ein gutes Fließ- und Benetzungsverhalten gegenüber den Verstärkungsmaterialien besitzen und mit diesen einen guten Verbund ausbilden. Sie müssen zudem bei Raumtemperatur oder Temperaturen unter 100°C härten und nach dem Entformen und gegebenenfalls Nachhärten hervorragende mechanische Eigenschaftswerte aufweisen.

Eine weitere Forderung, die in letzter Zeit zunehmende Bedeutung erlangt hat, ist die Forderung nach Schwerbrennbarkeit. In vielen Bereichen kommt dieser Forderung - wegen der Gefährdung von Menschen und Sachwerten - erste Priorität zu, beispielsweise bei Konstruktionswerkstoffen für den Flugzeug-, Schiff-, Kraftfahrzeug- und Schienenfahrzeugbau, insbesondere dann, wenn die Fahrzeuge als öffentliche Verkehrsmittel genutzt werden.

Zur Beurteilung des Brennverhaltens müssen die Formstoffe unterschiedliche Materialprüfungen bestehen. Für Elektronikprodukte beispielsweise wird die Brennprüfung nach UL 94 V gefordert, vorwiegend mit einer V-O-Einstufung. Für Kunststoffe im Schienenfahrzeugbau ist die Brennprüfung nach DIN 54837 und eine Klassifizierung nach DIN 5510-2 durchzuführen. Dabei wird beispielsweise bei der S4/SR2/ST2-Klassifizierung gefordert, daß der Werkstoff nach 3-minütigem Beflammen innerhalb weniger als 10 Sekunden verlischt, der Brandschaden weniger als 20 cm im Durchmesser beträgt, das Material nicht abtropft und die integrale Rauchgasdichte, gemessen durch Lichtschwächung, weniger als 50 % min beträgt. Für Baustoffe gelten die Vorschriften nach DIN 4102.

Die genannten Forderungen sind aber schwer zu erfüllen. Alle bekannten im technischen Einsatz befindlichen flammwidrigen Epoxidharzformstoffe enthalten deshalb bis zu 20 % Brom in Form bromierter Harzkomponenten. Oft werden zusätzlich erhebliche Mengen Antimontrioxid als synergistisch wirkendes Flammschutzmittel eingesetzt. Die Problematik bei diesen Verbindungen besteht darin, daß sie einerseits zwar als Flammschutzmittel hervorragend wirksam sind, andererseits aber auch sehr bedenkliche Eigenschaften besitzen. So steht Antimontrioxid auf der Liste der krebserzeugenden Chemikalien. Aromatische Bromverbindungen spalten bei der thermischen Zersetzung nicht nur Bromradikale und Bromwasserstoff ab, die zu starker Korrosion führen, sondern bei der Zersetzung in Gegenwart von Sauerstoff können insbesondere die hochbromierten Aromaten auch die hochtoxischen Polybromdibenzofurane und Polybromdibenzodioxine bilden. Erhebliche Probleme bereitet ferner die Entsorgung von bromhaltigen Altwerkstoffen und Müll.

Aus diesen Gründen hat es nicht an Versuchen gefehlt, die bromhaltigen Flammschutzmittel durch weniger problematische Substanzen zu ersetzen. So wurden beispielsweise Füllstoffe mit Löschgaswirkung, wie Aluminiumoxidhydrate ("J. Fire and Flammability", Vol. 3 (1972), Seiten 51 ff.), basische Aluminiumcarbonate ("Plast. Engng.", Vol. 32 (1976), Seiten 41 ff.) und Magnesiumhydroxide (EP-OS 0 243 201), sowie verglasende Füllstoffe, wie Borate ("Modern Plastics", Vol. 47 (1970), No. 6, Seiten 140 ff.) und Phosphate (US-PS 2 766 139 und 3 398 019), vorgeschlagen. Allen diesen Füllstoffen haftet jedoch der Nachteil an, daß sie die mechanischen und chemischen Eigenschaften der Verbundwerkstoffe zum Teil erheblich verschlechtern. Ferner wurden bereits organische Phosphorverbindungen, wie Phosphorsäureester, Phosphonsäureester und Phosphine, als flammhemmende Additive vorgeschlagen (siehe: W.C. Kuryla und A.J. Papa "Flame Retardancy of Polymeric Materials", Vol. 1, Seiten 24 bis 38 und 52 bis 61, Marcel Dekker Inc., New York, 1973).

Zur flammhemmenden Einstellung von Epoxidharzen können auch reaktive organische Phosphorverbindungen, wie epoxidgruppenhaltige Phosphorverbindungen, dienen, die im Epoxidharz-Netzwerk verankerbar sind. Aus der EP-PS 0 384 940 sind Epoxidharzmischungen für den Einsatz in Leiterplattenmaterialien bekannt, die ein phosphorfreies Polyepoxidharz in Kombination mit einer epoxidgruppenhaltigen Phosphorverbindung der Struktur 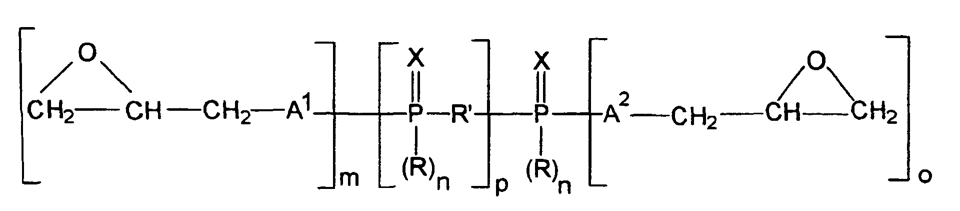 und einem speziellen aromatischen Polyamin (in Form eines Isocyanursäurederivates) als Härter enthalten. Aus der DE-OS 43 08 184 und der DE-OS 43 08 187 bzw. den entsprechenden Druckschriften WO 94/21706 und WO 94/21703 sind Epoxidharzmischungen bekannt, die ein phosphormodifiziertes Epoxidharz (Epoxidwert: 0,02 bis 1 mol/100 g) in Kombination mit dem genannten Polyamin enthalten. Die phosphormodifizierten Epoxidharze sind dabei aus Struktureinheiten aufgebaut, die sich einerseits von Polyepoxidverbindungen (mit mindestens zwei Epoxidgruppen pro Molekül) und andererseits von Phosphin-, Phosphon- und Pyrophosphonsäuren oder Phosphonsäurehalbestern bzw. von Phosphin- und Phosphonsäureanhydriden ableiten. Weitere Epoxidharzmischungen, die phosphormodifizierte Epoxidharze und aromatische Amine als Härter enthalten, sind aus den Druckschriften WO 96/07684, WO 96/07685 und WO 96/07686 bekannt. Alle diese Epoxidharzmischungen werden vorzugsweise aus einer Lösung verarbeitet; in Substanz sind sie fest oder hochviskos.

Es hat auch nicht an Versuchen gefehlt, auf der Basis der genannten Phosphorkomponenten Gießharze zu entwickeln. So sind beispielsweise anhydridisch härtbare Epoxidgießharze bekannt, die Phosphonsäureanhydrid als Härter enthalten oder durch Modifizierung von Epoxidharz- bzw. Härterkomponenten mit Phosphorverbindungen erhalten werden (siehe dazu: DE-PS 42 37 132, DE-OS 195 06 010, WO 96/07678 und WO 96/23018). Diese Gießharze sind vorwiegend hochviskos und ohne Lösemittel erst bei Temperaturen > 60°C verarbeitbar; für die Härtung werden Temperaturen von > 80°C benötigt. Niederviskose, bei Raumtemperatur aminisch härtende Epoxidharze, die nach der Härtung flammwidrig sind, sind bislang nicht bekannt.

Aufgabe der Erfindung ist es, eine Epoxidharzmischung bereitzustellen, die bei Raumtemperatur ausreichend niederviskos ist, um mittels einer Injektionstechnik verarbeitet werden zu können. Diese Harzmischung soll dabei einerseits für den Injektionsprozeß und das Füllen großflächiger Formen möglichst lange (ca. 30 bis 60 min) niederviskos und verarbeitbar bleiben, andererseits aber so reaktiv sein, daß sie nach dem Füllen der Form innerhalb weniger Stunden bei Raumtemperatur härtet, entformt werden kann und nach der Nachhärtung bei Temperaturen von 100 bis 120°C eine Glasübergangstemperatur T_{G} ≥ 80°C aufweist. Die dabei erhaltenen Epoxidharzformstoffe sollen gute mechanische Eigenschaften (E-Modul ≥ 18 GPa) und eine möglichst geringe Wasseraufnahme (≤ 5 %) haben. Außerdem sollen sie bei der Beflammung nach verschiedenen Brenntests die jeweils höchste Anforderung erfüllen, beispielsweise im Brenntest nach DIN 5510-2 nach einer Beflammung von 3 min innerhalb von ≤ 10 s verlöschen, einen Brandschaden ≤ 20 cm Durchmesser aufweisen, nicht abtropfen und möglichst wenig Rauchgase erzeugen. Für den Flugzeugbau müssen beispielsweise die US-Vorschriften FAR (Federal Aviation Regulations) Part 23 und Part 25 erfüllt werden.

Dies wird erfindungsgemäß dadurch erreicht, daß die Epoxidharzmischung folgende Komponenten enthält:
(A) eine phosphorfreie aliphatische, aromatische oder heterocyclische Epoxidverbindung mit einer Funktionalität > 1 oder ein Gemisch von phosphorfreien aliphatischen, aromatischen oder heterocyclischen Epoxidverbindungen, wobei mindestens eine Epoxidverbindung eine Funktionalität > 1 aufweist, und wobei beim Vorliegen einer Epoxidverbindung mit einer Funktionalität ≥ 3 eine Epoxidverbindung mit einer Funktionalität < 3 vorhanden ist,
(B) eine epoxidgruppenhaltige Phosphorverbindung folgender Struktur: 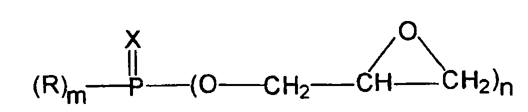 mit m = 0,1 oder 2 und n = 1,2 oder 3,
   wobei folgendes gilt: m + n = 3,
   - X: bedeutet ein O- oder S-Atom,
   - R: bedeutet einen - jeweils direkt oder über O oder S gebundenen - Alkylrest mit 1 bis 4 C-Atomen, Alkenyl- rest mit 2 oder 3 C-Atomen oder Phenylrest,
(C) wenigstens ein primäres oder sekundäres aliphatisches Polyamin mit NH- und/oder NH₂-Gruppen als Härter,
wobei die Epoxidharzmischung einen Phosphorgehalt von 2 bis 6 Masse-%.aufweist, vorzugsweise 3 bis 4,5 Masse-%, und der Anteil an aromatischen Partialstrukturen in den Komponenten A + B ≤ 20 Masse-% beträgt, jeweils bezogen auf die Komponenten A + B + C.
wobei
ein phosphormodifiziertes Epoxidharz mit einem Epoxidwert von 0,02 bis 1 mol/100 g, erhältlich durch Umsetzung von Polyepoxidverbindungen mit mindestens zwei Epoxidgruppen
pro Molekül mit Phosphinsäure- und/oder Phosphonsäureanhydriden oder Phosphonsäurehalbestern und nachfolgende thermische Abspaltung von Alkohol;
nicht enthalten ist,

Zusätzlich kann diese Epoxidharzmischung übliche Additive enthalten (Komponente D).

Es hat sich nämlich überraschenderweise gezeigt, daß Mischungen der Komponenten A, B und C sowie gegebenenfalls D alle Anforderungen gemäß der Aufgabenstellung erfüllen. Die Komponenten können so gemischt werden, daß die entstehenden Formulierungen ausreichend niederviskos und damit bei Raumtemperatur verarbeitbar sind. Die Formulierungen selbst sind ausreichend reaktiv und härten bei Raumtemperatur innerhalb von Stunden. Dabei werden Formstoffe erhalten, die gute mechanische Eigenschaftswerte und eine geringe Wasseraufnahme aufweisen sowie ausreichend flammwidrig sind.

Dieser Befund ist überraschend und völlig unerwartet, und zwar aus folgenden Gründen. In der deutschen Patentanmeldung Akt.Z. 196 39 720.0 bzw. in der entsprechenden internationalen Anmeldung Akt.Z. PCT/DE 97/02019 sind Epoxidharzmischungen beschrieben, die folgende Komponenten enthalten:
(a) ein phosphorfreies aliphatisches und/oder aromatisches und/oder heterocyclisches Epoxidharz,
(b) eine epoxidgruppenhaltige Phosphorverbindung,
(c) ein phosphormodifiziertes Epoxidharz,
(d) wenigstens ein primäres oder sekundäres aliphatisches Polyamin (als Härter).

Dabei ist ausgeführt, daß die Komponente a zusammen mit den Komponenten b und d, diese Komponenten entsprechen den Komponenten A, B und C, zwar niederviskose Mischungen ergibt, die sich gut verarbeiten und härten lassen, nach der Härtung Im Gegensatz dazu werden mit der Epoxidharzmischung nach der Erfindung, die eine spezielle Epoxidzusammensetzung aufweist sowie einen bestimmten Anteil an aromatischen Partialstrukturen und einen bestimmten Phosphorgehalt besitzt, Formstoffe erhalten, die eine ausreichende Flammwidrigkeit zeigen.

Die Komponente A ist eine phosphorfreie Epoxidverbindung oder ein Gemisch derartiger Verbindungen. Liegt nur eine Epoxidverbindung vor, dann weist diese eine Funktionalität > 1 auf ("Funktionalität" bedeutet dabei die Epoxidfunktionalität). Bei einem Gemisch weist mindestens eine Epoxidverbindung eine Funktionalität > 1 auf, vorzugsweise ≥ 2. Liegt eine Epoxidverbindung mit einer Funktionalität ≥ 3 vor, dann muß auch eine Epoxidverbindung mit einer Funktionalität < 3 vorhanden sein.

Die Komponente A ist vorzugsweise ein Gemisch aus einem aromatischen Polyglycidylether und einer Polyglycidylverbindung eines mehrwertigen aliphatischen Alkohols, gegebenenfalls in Abmischung mit einem cycloaliphatischen Epoxidharz. Für die Komponente A eignen sich allgemein insbesondere folgende Epoxide: aromatische Polyglycidylether, wie Bisphenol-A-diglycidylether, Bisphenol-F-diglycidylether und Bisphenol-S-diglycidylether, Polyglycidylether von Phenol/Formaldehyd-Harzen und Kresol/Formaldehyd-Harzen, wie Epoxyphenolnovolak, Resorcindiglycidylether und Tetrakis-(p-glycidylphenyl)-ethan, Di- bzw. Polyglycidylester von Phthal-, Isophthal- und Terephthalsäure sowie von Trimellithsäure, N-Glycidylverbindungen von aromatischen Aminen und heterocyclischen Stickstoffbasen, wie N,N-Diglycidylanilin, N,N,O-Triglycidyl-p-aminophenol, Triglycidylisocyanurat und N,N,N',N'-Tetraglycidyl-bis-(p-aminophenyl)-methan, Hydantoin-Epoxidharze und Uracil-Epoxidharze sowie Mono-, Di- und Polyglycidylverbindungen von ein- und mehrwertigen aliphatischen Alkoholen, wie Butanol, Hexanol, 2-Ethyl-hexanol, Ethylenglykol, Propylenglykol, 1,4-Butandiol, 1,6-Hexandiol, Trimethylolpropan und Polyalkylenglykolen. Des weiteren sind als Komponente (A) auch cycloaliphatische Epoxidharze geeignet, beispielsweise Vinylcyclohexendioxid, Cyclohexandicarbonsäure-diglycidylester oder hydrierter Bisphenol-A- und Bisphenol-F-diglycidylether.

Die epoxidgruppenhaltige Phosphorverbindung (Komponente B) ist vorzugsweise ein Diglycidylester einer Alkyl- oder Arylphosphonsäure. Die Komponente B kann sowohl in Form einzelner Verbindungen als auch in Form eines Gemisches mehrerer Verbindungen zum Einsatz gelangen. Als Komponente B eignen sich allgemein beispielsweise folgende epoxidgruppenhaltige Phosphorverbindungen, die sämtlich bereits bekannt sind: Methylethyl-glycidyl-phosphinat, Dimethyl-glycidyl-phosphinat und Diethyl-glycidyl-phosphinat; Methyl-diglycidyl-phosphonat, Ethyl-diglycidyl-phosphonat, Propyl-diglycidyl-phosphonat, Butyl-diglycidyl-phosphonat, Vinyl-diglycidyl-phosphonat und Phenyl-diglycidyl-phosphonat; Methyl-diglycidyl-phosphat, Ethyl-diglycidyl-phosphat, n-Propyl-diglycidyl-phosphat, n-Butyl-diglycidyl-phosphat und Isobutyl-diglycidyl-phosphat.

Die Synthese dieser Verbindungen erfolgt beispielsweise durch Umsetzung von Phosphinsäure-, Phosphonsäure- oder Phosphorsäurechloriden mit Glycidol ("Zh. Obshch. Khim.", Bd. 54, Heft 10 (1984), Seiten 2404 ff.), durch Umsetzung von Phosphorsäure oder Phosphonsäuren mit Epichlorhydrin (JP-OS 51-143620) oder durch Epoxidierung von Phosphorverbindungen, die Reste mit olefinischen Doppelbindungen enthalten (US-PS 2 856 369) .

Das Verhältnis der Komponenten A, B und C zueinander wird so gewählt, daß bei einem Phosphorgehalt von 2 bis 6 %, bezogen auf die Harzmischung (Komponenten A, B, C), vorzugsweise von 3 bis 4,5 %, möglichst niederviskose Mischungen (< 500 mPa.s) resultieren.

Die Komponenten A und B müssen nicht notwendigerweise aromatische Partialstrukturen aufweisen, d.h. der Anteil an derartigen Strukturen kann 0 Masse-% betragen. Vorzugsweise beträgt der Anteil an aromatischen Partialstrukturen in den Komponenten A + B jedoch ≥ 5 Masse-%.

Als aminischer Härter (Komponente C) kommen bekannte aliphatische Polyamine, wie Isophorondiamin, Triethylentetramin, Diethylentriamin, N-Aminoethylpiperazin, Ethylendiamin, 1,2- und 1,3-Diaminopropan, 2,2-Dimethyl-propylendiamin, 1,4-Diaminobutan, 1,6-Diaminohexan, 1,7-Diaminoheptan, 1,8-Diaminooctan, 1,9-Diaminononan, 1,12-Diaminododecan, Tris(2-aminoethyl)-amin, Trimethyl-hexamethylendiamin, 4-Azaheptamethylendiamin, N,N'-Bis-(3-aminopropyl)-butan-1,4-diamin, Bis(4-amino-2-methyl-cyclohexyl)-methan, Polyethylenglykol-diamin und Polypropylenglykol-diamin, allein oder im Gemisch zum Einsatz. Vorzugsweise ist die Komponente C Isophorondiamin, Bis (4-amino-2-methyl-cyclohexyl)-methan, Polyoxyethylen-diamin, Polyoxypropylen-diamin, 2,2,4- bzw. 2,4,4-Trimethyl-hexamethylendiamin-1,6 oder ein Gemisch aus wenigstens zwei dieser Polyamine.

Die Epoxidharzmischung nach der Erfindung kann - als zusätzliche Komponente D - gegebenenfalls übliche Additive enthalten. Diese Additive sind im allgemeinen Flexibilisatoren, Verarbeitungshilfsmittel, wie Entschäumer und Dispergatoren, sowie Füllstoffe, Farbstoffe, Haftvermittler und Formtrennmittel. Als Füllstoffe kommen dabei amorphe und/oder kristalline, feinteilige (Korngröße ≤ 10 µm) organische und anorganische Materialien zum Einsatz, deren Partikel möglichst geringe Unterschiede zwischen Länge, Breite und Dicke aufweisen und die Verarbeitung der Harzmischung nach einem Injektionsverfahren - auch in Gegenwart von Verstärkungsmaterialien - erlauben. Vorzugsweise ist die Komponente D Quarzmehl.

Das Verhältnis zwischen eingesetzter Aminwasserstoff-Funktion NH (Komponente C) und eingesetzter Epoxid-Funktion (Komponenten A und B) kann bei der erfindungsgemäßen Epoxidharzmischung 0,6:1 bis 1:1 betragen, vorteilhaft beträgt es 0,7:1 bis 0,9:1 und vorzugsweise etwa 0,8:1 bis 0,85:1.

Die Epoxidharzmischung nach der Erfindung dient insbesondere zur Herstellung von Verbundwerkstoffen auf der Basis von anorganischen oder organischen Verstärkungsmaterialien in Form von Fasern, Vliesen, Gelegen oder Geweben bzw. von Flächenstoffen oder Schaumstoffen mittels eines Injektionsverfahrens. Die Herstellung der Verbundwerkstoffe kann aber auch nach anderen Verfahren erfolgen, wie Handlaminieren, Prepreg-Technik oder spritzgußanalog. Die Verbundwerkstoffe werden vorzugsweise im Flugzeug-, Schiff-, Kraftfahrzeug- oder Schienenfahrzeugbau eingesetzt. Außer zur Herstellung von Verbundwerkstoffen ist die Epoxidharzmischung nach der Erfindung auch als Gießharz, Klebharz oder Lackrohstoff verwendbar.

Anhand von Ausführungsbeispielen soll die Erfindung noch näher erläutert werden.

Es werden folgende Abkürzungen verwendet:
- EPN: Epoxyphenolnovolak
- BADGE: Bisphenol-A-diglycidylether
- BFDGE: Bisphenol-F-diglycidylether
- HBFDGE: hydrierter Bisphenol-F-diglycidylether
- BuDGE: Butandioldiglycidylether
- HxDGE: Hexandioldiglycidylether
- VCDO: Vinylcyclohexendioxid
- EHG: 2-Ethyl-hexyl-glycidylether
- PPDGE: Phenylphosphonsäurediglycidylester
- PrPDGE: Propylphosphonsäurediglycidylester
- MPDGE: Methylphosphonsäurediglycidylester
- IPD: Isophorondiamin
- BAMCM: Bis(4-amino-2-methyl-cyclohexyl)-methan
- TMD: Gemisch aus 2,2,4-Trimethyl-hexamethylendiamin- 1,6 und 2,4,4-Trimethylhexamethylendiamin-1,6
- D400: Polyoxypropylen-(400)-diamin
- EFS: Epoxyfunktionelles Siloxan
- Byk: Byk A500/A525 (70:30), Entschäumer der Fa. Byk
- EST800: Quarzmehl Silbond 800 EST der Fa. Quarzwerke Frechen; Korngrößenverteilung: > 8 µm: 1 %, 6 bis 8 µm: 3 bis 9 %, 4 bis 6 µm: 22 %, 2 bis 4 µm: 56 %, < 2 µm: Rest.

### Beispiele 1 bis 10

Aufbereitung der Epoxidharzmischungen:
Die in Tabelle 1 aufgeführten Mengen der Komponenten A und B werden vermischt; gegebenenfalls wird als weiterer Mischungsbestandteil die Komponente D zugegeben. Nach sorgfältiger Entgasung der Mischung wird die in Tabelle 1 aufgeführte Menge eines vorentgasten aminischen Härters (Komponente C) zugesetzt, die Mischung homogenisiert und nochmals entgast. In Tabelle 1 ist die Zusammensetzung der Epoxidharzmischungen sowie deren Phosphorgehalt und der jeweilige Anteil der aromatischen Partialstrukturen in der Gesamtmenge der Komponenten A und B ("aromatischer Anteil") angegeben.

### Herstellung von Plattenprüfkörpern:

Die Formprüfkörper werden mittels einer Plattenform hergestellt. Die Plattenform besteht aus zwei 25 mm dicken Acrylglasplatten (als Deckplatte und Rückwand) und einer Gummidichtung (als Abstandhalter) mit den Innenabmessungen 500 x 200 mm und einer Dicke von 4 mm. Deckplatte und Rückwand können unter Verwendung des Abstandhalters vakuumdicht verschraubt werden. Die Plattenform ist jeweils durch eine Schlaucholive evakuierbar und mit der Reaktionsharzmischung befüllbar. In die Plattenform werden 12 Lagen Glasgewebe (390 g/m², 0,45 mm) und 2 Lagen Glasvlies (auf der Vorder- bzw. Rückseite des Glasgewebestapels) eingelegt. Die Plattenform wird dann geschlossen und evakuiert. Über einen Silikonschlauch wird die aufbereitete Epoxidharzmischung unmittelbar nach dem Entgasen in die evakuierte Plattenform eingebracht. Die glasgewebeverstärkte Epoxidharzmischung härtet bei Raumtemperatur in ca. 16 bis 24 h aus und kann entformt werden. Der entformte Prüfkörper wird wie nachfolgend beschrieben nachgehärtet.

Zur Beurteilung der Verarbeitungs- und Formstoffeigenschaften werden folgende Prüfungen durchgeführt:
- Viskosität und Topfzeit
   Die Viskosität der aminisch härtbaren Epoxidharzmischung im Ausgangszustand und die Topfzeit bei Kalthärtung werden mit einem Platte-Kegel-Rheometer (Haake Rotovisko PK 1 0.3) bei 25°C bestimmt. Als Topfzeit wird die Zeit bis zum Erreichen einer Viskosität von 1000 mPa·s angegeben.
- Härtung
   Alle Proben werden in der Form 16 h bei Raumtemperatur gehärtet. Die entformten Proben werden folgendermaßen nachgehärtet: 2 h bei 50°C, 2 h bei 60°C, 2 h bei 70°C, 2 h bei 80°C und 12 h bei 120°C.
- Glasübergangstemperatur
   Die Glasübergangstemperatur wird über die thermische Ausdehnung bestimmt. In einem Dilatometer (Perkin Elmer TMA 7) wird ein Probekörper (Abmessungen: 5 x 5 x 4 mm) zur Konditionierung auf 160°C erwärmt und mit einer Kühlrate von 5 K/min auf 25°C abgekühlt. Anschließend wird der Probekörper mit einer Heizrate von 5 K/min auf 200°C erwärmt; parallel dazu wird die thermische Ausdehnung gemessen. Als Glasübergangstemperatur wird die Temperatur angegeben, bei der sich der Ausdehnungskoeffizient sprunghaft ändert.
- Interlaminare Haftung
   Die interlaminare Haftung wird an Probekörpern (Abmessungen: 120 x 50 x 4 mm) mit 12 Lagen Glasgewebe nach DIN 53539-79 ermittelt.
- Wasseraufnahme
   Zur Bestimmung der Wasseraufnahme werden Probekörper der Kantenlänge 50 x 50 x 4 mm bei 20°C in vollentsalztem Wasser so lange gelagert, bis die Masse konstant bleibt; dann wird gravimetrisch die Massezunahme bestimmt.
- Brandverhalten
   Das Brandverhalten wird nach DIN 54837 geprüft. Dazu wird jeweils ein Plattenprüfkörper (Abmessungen: 500 x 190 x 4 mm) mit 12 Lagen Glasgewebe in einem Brandschacht nach DIN 50050 befestigt und mit einer Propangasflamme 3 min beflammt. Für eine Klassifizierung nach DIN 5510-2/S4 darf der Mittelwert der Nachbrennzeiten von 5 Prüfkörpern 10 s nicht überschreiten und die Schadensgröße maximal 20 cm im Durchmesser betragen. Für die Klassifizierung nach S3 sind Nachbrennzeiten bis 100 s und eine Schadensgröße von bis zu 25 cm zulässig. Die Rauchentwicklung wird während des Versuches im Abgasrohr gemessen. Für eine Klassifizierung nach SR 2 darf die Integration über die Versuchsdauer von 5 min 50 %.min Lichtschwächung nicht erreichen. Für eine Klassifizierung nach SR 1 ist eine Lichtschwächung < 100 %.min erforderlich.

Die bezüglich des Verarbeitungsverhaltens, der thermisch-mechanischen Eigenschaften und des Brandverhaltens ermittelten Werte sind in Tabelle 2 zusammengefaßt.

### Beispiele 11 bis 14

Diese Beispiele sind Vergleichsbeispiele. Die Aufbereitung der Epoxidharzmischungen, die Herstellung von Prüfkörpern und die Prüfung zur Beurteilung der Verarbeitungs- und Formstoffeigenschaften erfolgt entsprechend den Beispielen 1 bis 10. In Tabelle 3 ist die Zusammensetzung der Epoxidharzmischungen sowie deren Phosphorgehalt und der jeweilige Anteil der aromatischen Partialstrukturen in der Gesamtmenge der Komponenten A und B ("aromatischer Anteil") angegeben. In Tabelle 4 finden sich die Untersuchungsergebnisse bezüglich des Verarbeitungsverhaltens, der thermisch-mechanischen Eigenschaften und des Brandverhaltens.

Die Vergleichsbeispiele zeigen (siehe dazu die Tabellen 3 und 4), daß in dem Fall, wenn der Anteil der aromatischen Partialstrukturen der Komponenten A und B > 20 % beträgt, Formstoffe mit unzureichender Schwerbrennbarkeit erhalten werden.

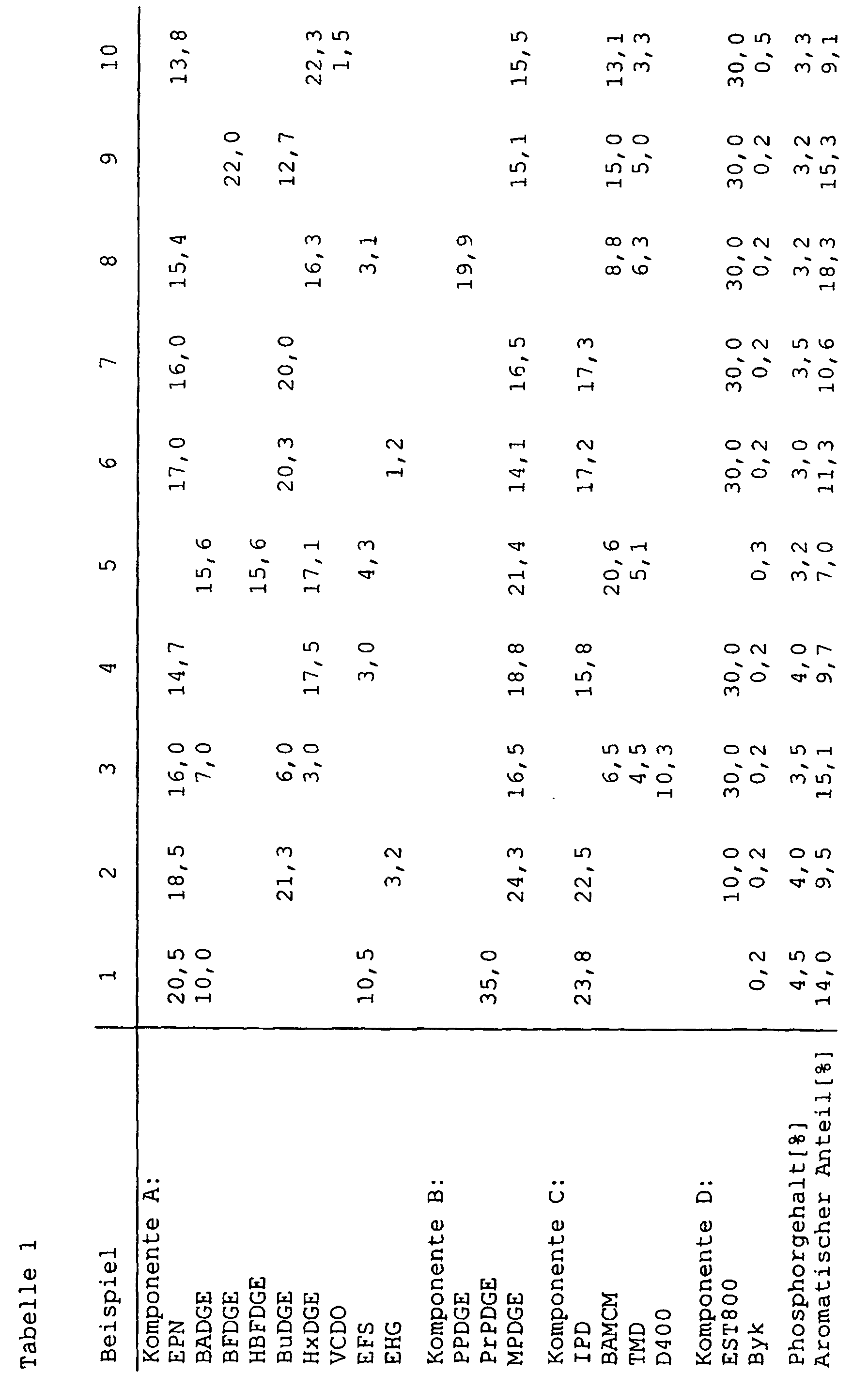

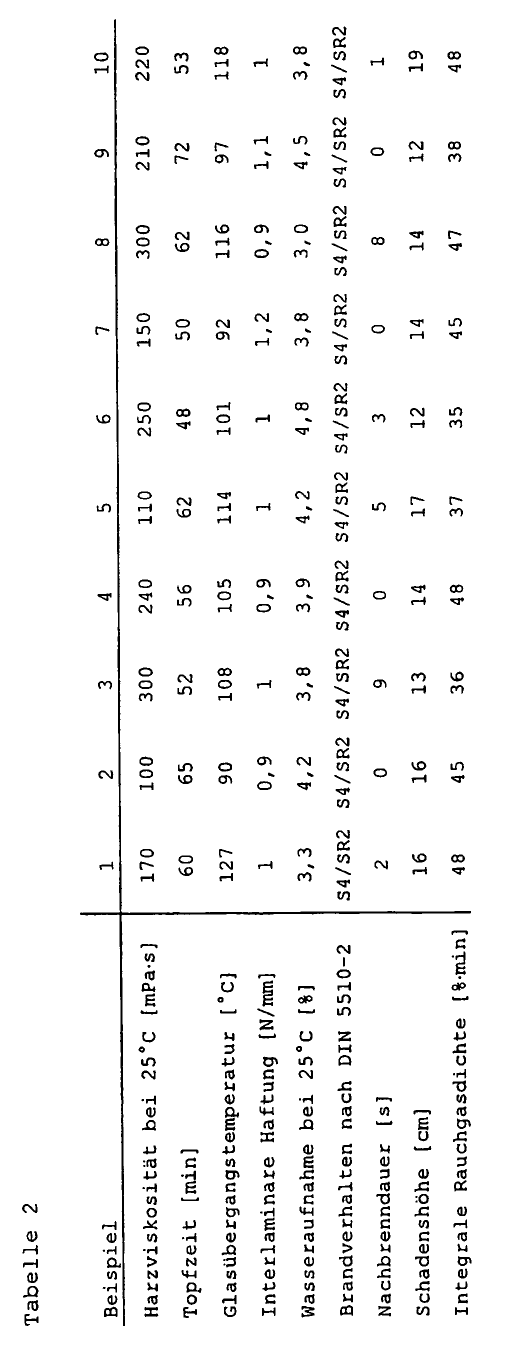

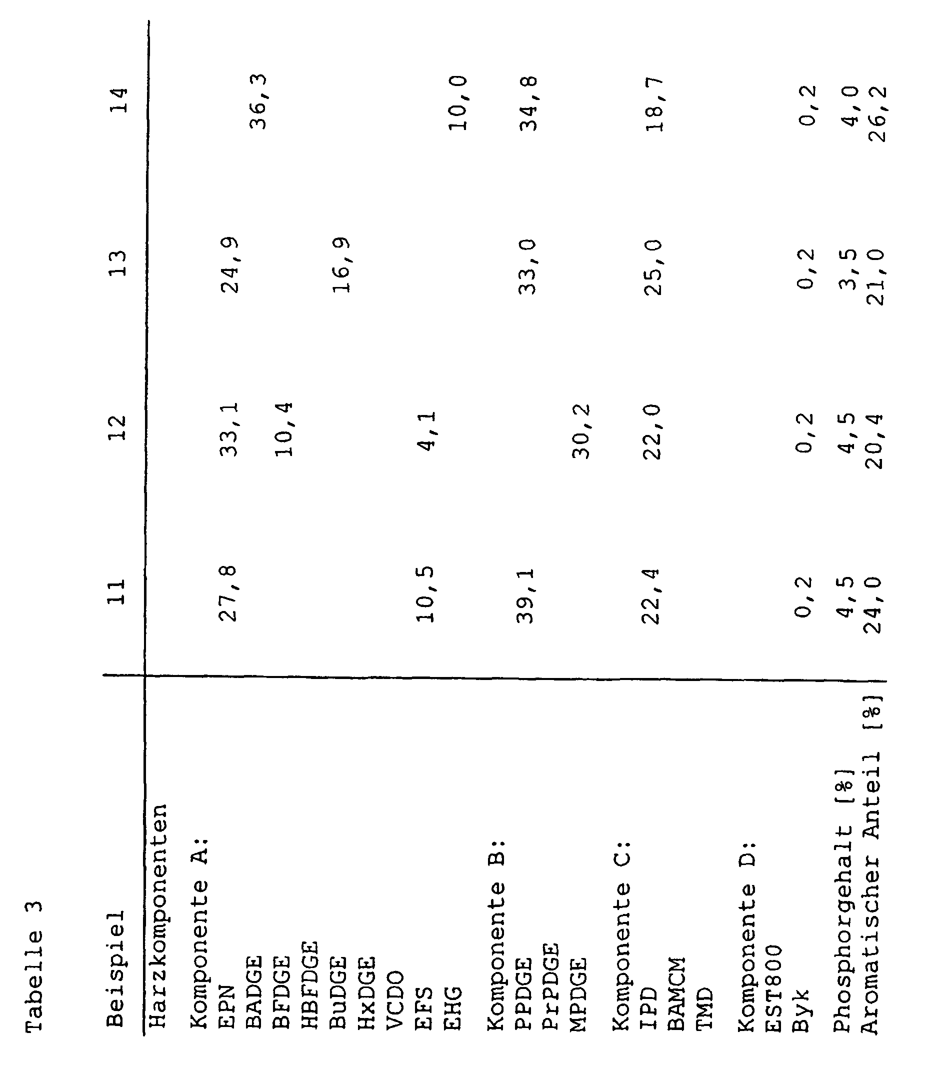

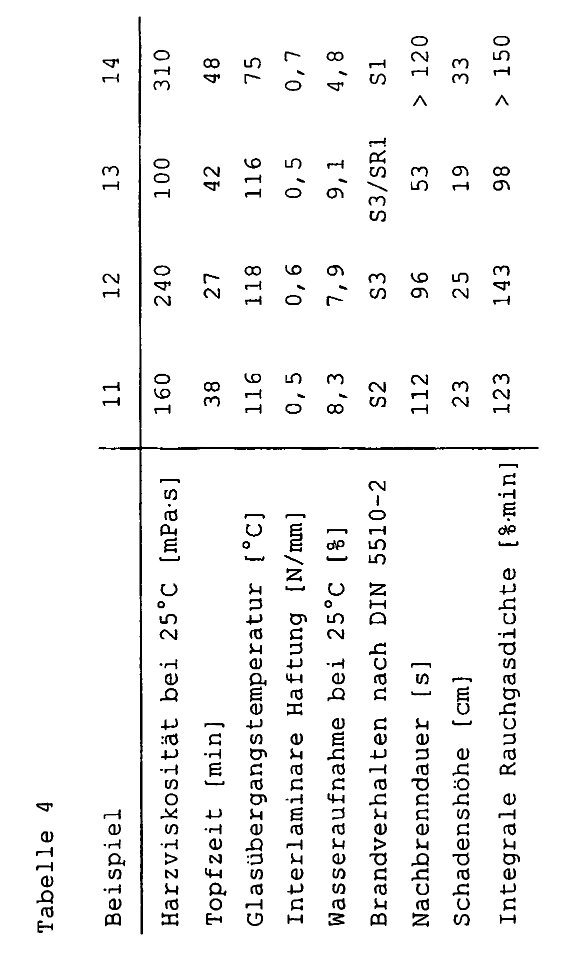

## Patentansprüche

1. Epoxidharzmischung zur Herstellung von Verbundwerkstoffen,
**dadurch gekennzeichnet, daß** sie folgende Komponenten enthält:
(A) eine phosphorfreie aliphatische, aromatische oder heterocyclische Epoxidverbindung mit einer Funktionalität > 1 oder ein Gemisch von phosphorfreien aliphatischen, aromatischen oder heterocyclischen Epoxidverbindungen, wobei mindestens eine Epoxidverbindung eine Funktionalität > 1 aufweist, und wobei beim Vorliegen einer Epoxidverbindung mit einer Funktionalität ≥ 3 eine Epoxidverbindung mit einer Funktionalität < 3 vorhanden ist,
(B) eine epoxidgruppenhaltige Phosphorverbindung folgender Struktur: 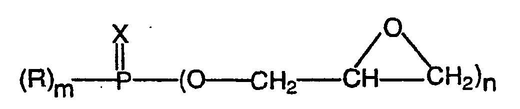 mit m = 0,1 oder 2 und n = 1,2 oder 3,
wobei folgendes gilt: m + n = 3,
X bedeutet ein O- oder S-Atom,
R bedeutet einen - jeweils direkt oder über O oder S gebundenen - Alkylrest mit 1 bis 4 C-Atomen, Alkenyl- rest mit 2 oder 3 C-Atomen oder Phenylrest,
(C) wenigstens ein primäres oder sekundäres aliphatisches Polyamin mit NH- und/oder NH₂-Gruppen als Härter,
wobei die Epoxidharzmischung einen Phosphoranteil von 2 bis 6 Masse-% aufweist und der Anteil an aromatischen Partialstrukturen in den Komponenten A + B ≤ 20 Masse-% beträgt, jeweils bezogen auf die Komponenten A + B + C.
wobei ein phosphormodifiziertes Epoxidharz mit einem Epoxidwert von 0,02 bis 1 mol/100 g, erhältlich durch Umsetzung von Polyepoxidverbindungen mit mindestens zwei Epoxidgruppen pro Molekül mit Phosphinsäure- und/oder Phosphonsäureanhydriden oder Phosphonsäurehalbestern und nachfolgende thermische Abspaltung von Alkohol;
nicht enthalten ist,

2. Epoxidharzmischung nach Anspruch 1, **dadurch gekennzeichnet, daß** sie übliche Additive enthält (Komponente D).

3. Epoxidharzmischung nach Anspruch 1 oder 2, **dadurch gekennzeichnet, daß** der Phosphorgehalt 3 bis 4,5 Masse-% beträgt.

4. Epoxidharzmischung nach einem der Ansprüche 1 bis 3, **dadurch gekennzeichnet, daß** das Verhältnis zwischen Aminwasserstoff-Funktion und Epoxid-Funktion 0,6:1 bis 1:1 beträgt, vorzugsweise etwa 0,8:1 bis 0,85:1.

5. Epoxidharzmischung nach einem oder mehreren der Ansprüche 1 bis 4, **dadurch gekennzeichnet, daß** die Komponente A ein Gemisch aus einem aromatischen Polyglycidylether und einer Polyglycidylverbindung eines mehrwertigen aliphatischen.Alkohols ist, gegebenenfalls in Abmischung mit einem cycloaliphatischen Epoxidharz.

6. Epoxidharzmischung nach einem oder mehreren der Ansprüche 1 bis 5, **dadurch gekennzeichnet, daß** die Komponente B ein Diglycidylester einer Alkyl- oder Arylphosphonsäure ist.

7. Epoxidharzmischung nach einem oder mehreren der Ansprüche 1 bis 6, **dadurch gekennzeichnet, daß** die Komponente C Isophorondiamin, Bis(4-amino-2-methylcyclohexyl)-methan, Polyoxyethylen-diamin, Polyoxypropylen-diamin, 2,2,4- bzw. 2,4,4-Trimethyl-hexamethylendiamin-1,6 oder ein Gemisch aus wenigstens zwei dieser Polyamine ist.

8. Epoxidharzmischung nach einem oder mehreren der Ansprüche 2 bis 7, **dadurch gekennzeichnet, daß** die Komponente D Quarzmehl ist.

9. Verbundwerkstoffe auf der Basis von anorganischen oder organischen Verstärkungsmaterialien in Form von Fasern, Vliesen, Gelegen oder Geweben bzw. von Flächenstoffen oder Schaumstoffen, hergestellt aus einer Epoxidharzmischung nach einem oder mehreren der Ansprüche 1 bis 8 mittels eines Injektionsverfahrens.

10. Verwendung der Verbundwerkstoffe nach Anspruch 9 im Flugzeug-, Schiff-, Kraftfahrzeug- oder Schienenfahrzeugbau.

## Claims

1. Epoxy resin mixture for the production of composites, **characterised in that** it contains the following components:
(A) a phosphorus-free aliphatic, aromatic or heterocyclic epoxy compound with a functionality > 1 or a mixture of phosphorus-free aliphatic, aromatic or heterocyclic epoxy compounds, at least one epoxy compound having a functionality > 1, and an epoxy compound with a functionality < 3 being provided if an epoxy compound with a functionality ≥ 3 is present,
(B) an epoxy-group-containing phosphorus compound having the following structure: 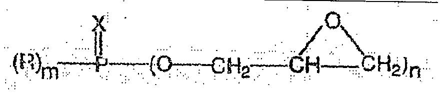 where m = 0, 1 or 2 and n = 1, 2 or 3,
and where m + n = 3,
X means an O or S atom,
R means an alkyl residue - linked directly or via O or S - with 1 to 4 C atoms, an alkenyl residue with 2 or 3 C atoms or a phenyl residue,
(C) at least one primary or secondary aliphatic polyamine with NH and/or NH₂ groups as curing agent,
wherein the epoxy resin mixture has a phosphorous content of 2 to 6% by weight, and the proportion of aromatic partial structures in the components A + B is ≤ 20% by weight, relative to the components A + B + C in each case,
wherein a phosphorous-modified epoxy resin with an epoxy value of 0.02 to 1 mol/100 g, obtainable by conversion of polyepoxy compounds with at least two epoxy groups per molecule with phosphinic acid and/or phosphonic acid anhydrides or phosphonic acid half esters and subsequent liberation of alcohol is not included.

2. Epoxy resin mixture according to Claim 1, **characterised in that** it contains normal additives (component D).

3. Epoxy resin mixture according to Claim 1 or 2, **characterised in that** the phosphorus content is 3 to 4.5% by weight.

4. Epoxy resin mixture according to one of Claims 1 to 3, **characterised in that** the ratio between amine hydrogen function and epoxy function is 0.6:1 to 1:1, preferably around 0.8:1 to 0.85:1.

5. Epoxy resin mixture according to one or more of Claims 1 to 4, **characterised in that** component A is a mixture of an aromatic polyglycidyl ether and a polyglycidyl compound of a multivalent aliphatic alcohol, possibly admixed with a cycloaliphatic epoxy resin.

6. Epoxy resin mixture according to one or more of Claims 1 to 5, **characterised in that** component B is a diglycidyl ester of an alkyl- or arylphosphonic acid.

7. Epoxy resin mixture according to one or more of Claims 1 to 6, **characterised in that** component C is isophoron diamine, bis(4-amino-2-methylcyclohexyl)methane, polyoxyethylene diamine, polyoxypropylene diamine, 2,2,4- or 2,4,4-trimethyl hexamethylene diamine-1,6 or a mixture of at least two of these polyamines.

8. Epoxy resin mixture according to one or more of Claims 2 to 7, **characterised in that** component D is quartz powder.

9. Composites based on inorganic or organic reinforcing materials in the form of fibres, nonwoven fabrics, scrims or woven fabrics or of sheet materials or foamed plastics, produced form an epoxy resin mixture according to one or more of Claims 1 to 8 using an injection method.

10. Use of the composites according to Claim 9 in aircraft, ship, road vehicle or railway vehicle construction.

## Revendications

1. Mélange de résine époxy pour préparer des matériaux composites, **caractérisé en ce qu'**il contient les composants suivants :
(A) un composé époxyde aliphatique, aromatique ou hétérocyclique, exempt de phosphore, ayant une fonctionnalité > 1, ou un mélange de composé époxyde aliphatique, aromatique ou hétérocyclique exempt de phosphore, au moins un composé époxyde présentant une fonctionnalité > 1, et lorsqu'un composé époxyde existe avec une fonctionnalité ≥ 3, un composé époxyde ayant une fonctionnalité < 3 est présent,
(B) un composé du phosphore contenant des groupes époxyde de structure suivante : 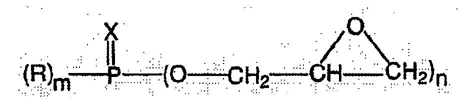 avec m = 0, 1 ou 2 et n = 1, 2 ou 3,
où s'applique ce qui suit : m + n = 3,
X représente un atome de O, ou de S,
R représente un résidu, lié à chaque fois directement ou par l'intermédiaire d'un atome de O ou de S, d'alkyle ayant de 1 à 4 atomes de C, d'alcényle ayant 2 à 3 atomes de C, ou de phényle,
(C) au moins une polyamine aliphatique primaire ou secondaire, ayant des groupes NH et/ou NH₂ en tant que durcisseur,
le mélange de résine époxyde présentant une teneur en phosphore de 2 à 6% en masse, et la teneur en structure partielle aromatique dans les composants A + B étant ≤ 20% en masse, à chaque fois par rapport aux composants A + B + C,
une résine époxyde modifiée par le phosphore ayant un indice époxyde de 0,02 à 1 mole/100 g, que l'on peut obtenir par réaction de composés polyépoxyde ayant au moins deux groupes époxy par molécule, avec des anhydrides d'acides phosphiniques et/ou d'acides phosphoniques, ou des demi-esters d'acides phosphoniques, suivie par une dissociation thermique d'alcool, n'y étant pas contenue.

2. Mélange de résine époxy selon la revendication 1, **caractérisé en ce qu'**elle contient des additifs courants (composant D).

3. Mélange de résine époxy selon la revendication 1 ou 2, **caractérisé en ce que** la teneur en phosphore est de 3 à 4,5% en masse.

4. Mélange de résine époxy selon l'une quelconque des revendications 1 à 3, **caractérisé en ce que** le rapport entre la fonction hydrogène d'amine et la fonction époxyde est de 0,6:1 à 1:1, de préférence d'environ 0,8:1 à 0,85:1.

5. Mélange de résine époxy selon l'une ou plusieurs des revendications 1 à 4, **caractérisé en ce que** le composant A est un mélange d'un poly(éther glycidylique) aromatique, et d'un composé polyglycidylique d'un alcool aliphatique polyvalent, éventuellement en mélange avec une résine époxyde cycloaliphatique.

6. Mélange de résine époxy selon l'une ou plusieurs des revendications 1 à 5, **caractérisé en ce que** le composant B est un ester diglycidylique d'un acide alkyl- ou aryl-phosphonique.

7. Mélange de résine époxy selon l'une ou plusieurs des revendications 1 à 6, **caractérisé en ce que** le composant C est l'isophorone-diamine, le bis(4-amino-2-méthyl-cyclohexyl)-méthane, la polyoxyéthylène-diamine, la polyoxypropylène-diamine, la 2,2,4- ou 2,4,4-triméthyl-hexaméthylène-diamine-1,6 ou un mélange d'au moins deux de ces polyamines.

8. Mélange de résine époxy selon l'une ou plusieurs des revendications 2 à 7, **caractérisé en ce que** le composant D est la poudre de quartz.

9. Matériaux composites à base de matières de renforcement inorganiques ou organiques sous forme de fibres, de non tissés, de mats ou de tissus, respectivement de matières en nappe ou matières de mousse, préparés à partir d'un mélange de résine époxyde selon l'une ou plusieurs des revendications 1 à 8, au moyen d'un procédé par injection.

10. Utilisation des matériaux composites selon la revendication 9, dans la construction d'avions, de navires, de véhicules à moteur ou de véhicules sur rails.
